# EUROPÄISCHE PATENTANMELDUNG

(11) **EP 1 248 196 A2**
(43) Veröffentlichungstag der Anmeldung: **09.10.2002**
(21) Anmeldenummer: 02006485.3
(22) Anmeldetag: 22.03.2002
(51) Int. Cl.: G06F 11/34

(54) **Verfahren zur Gewinnung von Daten für die Optimierung von Programmstrukturen**

(30) Priorität: 02.04.2001 DE 10116334; 18.05.2001 DE 10124414
(71) Anmelder: SIEMENS AKTIENGESELLSCHAFT, 80333 München (DE)
(72) Erfinder: Walsdorf, Karl-Heinz, 76676 Graben-Neudorf (DE)

(57) **Zusammenfassung**

Die Erfindung richtet sich auf ein Verfahren zur Gewinnung von Daten für die Optimierung der Struktur eines von einem Computer abgearbeiteten Programms, das auf vordefinierte Eingaben an einem mit dem Computer gekoppelten Bedienungsgerät jeweils zugeordnete Funktionen ausführt, wobei in dem betreffenden Programm oder einem unterlagerten Programmteil eine Programmsequenz zum Eintragen von Bedienungsinformationen in einen Protokollspeicher bei, insbesondere vor dem Aufruf einer auszuführenden Funktion durchlaufen wird.

## Beschreibung

Die Erfindung richtet sich auf ein Verfahren zur Gewinnung von Daten für die Optimierung der Struktur eines von einem Computer abgearbeiteten Programms, insbesondere Anwendungsprogramms, wobei der Computer unter Steuerung dieses Programms auf vordefinierte Eingaben an einem mit dem Computer gekoppelten Bedienungsgerät jeweils zugeordnete Funktionen ausführt.

Der Fortschritt bringt immer komplexere Anwendungsprogramme mit sich, mit immer mehr Funktionen, wobei ein gewisses Problem darin besteht, den Aufruf der verschiedensten Funktionen so einfach als möglich zu gestalten, damit ein Anwender in einem möglichst kurzen Zeitraum die gestellte Aufgabe anhand eines vorgegebenen Programms lösen kann. Da bei der Erstellung eines neuen Programmes die genaue Art der Benutzung nicht vollständig vorhergesehen werden kann, weil diese u.a. von Praxisfaktoren wie Aufgabenstellung, vorhandenen Geräten, Geschicklichkeit der Anwender, etc. abhängt, werden hierzu bislang vor Auslieferung eines neuartigen Programmes Versuche mit Testpersonen durchgeführt, die anhand dieses Programmes gestellte Aufgaben in einem Labor lösen sollen. Hierbei werden die einzelnen Bedienungshandlungen durch einen Beobachter protokolliert, darüber hinaus wird eine derartige Testperson oft auch mit einem Videogerät gefilmt. Evtl. werden Fragen, Kommentare und sonstige Aussagen der Testperson ebenfalls aufgenommen, und aus diesen verschiedensten Informationen werden sodann Rückschlüsse über die Praxistauglichkeit des betreffenden Programmes gezogen. Diese Vorgehensweise hat sich jedoch nicht als optimal erwiesen, da die gestellten Aufgaben nicht aus der Praxis stammen, besondere Gerätekonfigurationen meist unbeachtet bleiben, Testpersonen häufig nicht denselben Kenntnisstand haben wie die späteren, tatsächlichen Anwender, etc. Ein weiteres Problem ist die Kürze der möglichen Beobachtungszeit, da aus Kostengründen und/oder aus terminlichen Gründen Testpersonen zumeist nur über einen vergleichsweise kurzen Zeitraum zur Verfügung stehen. Die solchermaßen gewonnen Informationen sind daher für die Praxis wenig aussagekräftig und führen nicht selten dazu, dass die Bedienoberfläche eines neuen Programmes nicht optimal auf die Praxisanforderungen eingestellt wird. Der Nachteil sind langwierige und uneffiziente Anwendersitzungen, mit dem Ergebnis, dass der mögliche Nutzen eines Programmes nicht richtig eingeschätzt wird und demzufolge einem Konkurrenzprodukt der Vorzug gegeben wird.

Aus diesen Nachteilen des Stands der Technik resultiert das die Erfindung initiierende Problem, eine Möglichkeit zu schaffen, mit der neue Programme mit geringstmöglichem Aufwand über einen langen Zeitraum hinweg unter realen Einsatzbedingungen auf ihre Anwender-, insbesondere Bedienungsfreundlichkeit untersucht werden können, um präzise Anhaltspunkte für eine Optimierung der Bedienoberfläche zu erhalten.

Die Lösung dieses Problems gelingt dadurch, dass bei einer, vorzugsweise jeder Eingabe, insbesondere vor dem Aufruf einer auszuführenden Funktion, von dem durch das zu optimierende Programm gesteuerten Computer selbsttätig Informationen zu der jüngsten Bedienungshandlung listenförmig in einen Protokollspeicher eingetragen werden.

Das optimierende Programm übernimmt damit zusätzlich die Aufgabe des Protokollierens der Bedienungshandlungen, so dass hierzu keine Laborbedingungen mehr erforderlich sind. Deshalb kann ein durch diese Funktionalität ergänztes Programm nach einer ersten Testphase bereits ausgeliefert werden und zeichnet sodann die Benutzungshandlungen einschließlich aller dabei auftretender Probleme in einem Protokollspeicher auf. Durch Auslesen dieses Protokollspeichers kann der Programmhersteller sodann erkennen, ob von dem betreffenden Anwender die Möglichkeiten des neuen Programms ausgeschöpft werden, oder ob bspw. verschiedene Funktionalitäten nicht erkannt werden oder sonstige Probleme auftreten. Diese Informationen sind dabei weit aussagekräftiger als in einem Labor gemachte Studien und können ohne größere Schwierigkeiten über einen größeren Zeitraum von bspw. einem oder mehreren Monaten hinweg ohne Zusatzkosten durchgeführt werden.

Es hat sich als günstig erwiesen, dass in dem betreffenden Programm oder einem unterlagerten Programmteil eine Programmsequenz zum Sammeln, Aufbereiten und Eintragen von Informationen in einen Protokollspeicher vorgesehen ist. Erfindungsgemäß wird nicht nur die einzelne Bedienungshandlung aufgezeichnet, bzw. ausgewertet, sondern auch Zusatzinformationen, bspw. über den betreffenden Anwender, den Zweck der Programmnutzung, über die verstrichene Zeit seit der vorangehenden Eingabe, über die Benutzung von Hilfefunktionen oder sonstige Kommentare. All diese Informationen werden im Anschluss an eine Eingabe von der erfindungsgemäßen Programmsequenz zusammengestellt und in definierter Form in die Protokollliste eingetragen. Hierbei erforderliche Berechnungen wie bspw. die Zeitdifferenz zu der vorangehenden Eingabe kann diese Programmsequenz ebenso übernehmen wie die Zwischenspeicherung des Zeitpunktes der jeweils jüngsten Eingabe.

Erfindungsgemäß ist weiterhin vorgesehen, dass die Protokollierungs-Programmsequenz im Rahmen des Bedienungshandlungen interpretierenden Programmteils abgearbeitet wird. Jede manuelle Eingabe in einen Computer wird unabhängig von dem verwendeten Eingabegerät wie Tastatur, Maus, drucksensitiver Bildschirm, etc. von einem derartiger Bedienungshandlungen interpretierenden Programmteil registriert und ausgewertet. Indem die erfindungsgemäße Programmsequenz in diesen Bedienungshandlungen interpretierenden Programmteil eingekoppelt wird, können die einzelnen Funktionen bzw. die betreffenden Programmsequenzen völlig unverändert ablaufen. Außerdem stehen zu diesem Zeitpunkt weitere Informationen, bspw. über das verwendete Eingabemedium, zur Verfügung, die bei Aufruf der betreffenden Funktion nicht mit übergeben werden und daher verloren gehen.

Es liegt im Rahmen der Erfindung, dass die Protokollierungs-Programmsequenz die Struktur eines Unterprogramms hat, das von dem Bedienungshandlungen interpretierenden Programmteil aufgerufen wird. Ein derartiger Unterprogrammteil kann relativ leicht von dem Hauptprogramm abgetrennt werden, wenn die zu optimierende Software ihre endgültige Gestalt gefunden hat, wobei sodann ausschließlich in dem Hauptprogramm eine einzige Programmzeile gelöscht werden muss, nämlich der betreffende Unterprogrammaufruf.

Sofern der Durchlauf, insbesondere Aufruf der Protokollierungs-Programmsequenz von einer Bedingung abhängig ist, die durch eine Eingabe ein- und/oder ausgeschalten werden kann, ist es dem einzelnen Anwender überlassen, ob er seine Bedienungshandlungen aufzeichnen lassen will oder nicht. Somit kann das zu optimierende Programm während der Testphase in unveränderter Form an solche Anwender ausgeliefert werden, die mit einer Aufzeichnung während der Testphase einverstanden sind, und auch an solche Anwender, die sich hierfür nicht bereit erklärt haben.

Die Erfindung lässt sich dahingehend weiterbilden, dass der Protokollspeicher einen Teil eines computereigenen Speichers darstellt, der durch Definition einer oder mehrere Protokolldateien für entsprechende Einträge reserviert ist. Indem solchermaßen auf einen bereits vorhandenen Speicherbaustein des betreffenden Computers zurückgegriffen wird, können die für die Durchführung des erfindungsgemäßen Verfahrens erforderlichen Änderungen auf reine Programmänderungen beschränkt werden, so dass prinzipiell jeder Anwender eine derartige Testphase durchführen kann.

Weitere Vorzüge ergeben sich dadurch, dass die in den Protokollspeicher einzutragenden Bedienungsschritte Informationen über die auszuführende Funktion, ggf. über die Person des aktuellen Bedieners, das verwendete Eingabemedium, Zeitpunkt, Zweck, ggf. eingegebene Parameter oder sonstige Umstände wie Benutzung von Hilfestellungsfunktionen od. dgl. umfassen. Erst eine derartige Vielzahl von Informationen erlaubt es, realistische Aussagen darüber zu treffen, ob ein Anwender alle Möglichkeiten des neuen Programms erkannt hat oder ob ihm bestimmte Bedienungsmöglichkeiten nicht geläufig sind. U.a. gibt ein häufiger Wechsel des Eingabegerätes (wenn bspw. zwischen einer Vielzahl von Tastenbetätigungen die Bedienung der Computermaus erforderlich ist) Hinweise auf notwendige Programmverbesserungen.

Ein weiteres, erfindungsgemäßes Merkmal liegt darin, dass die auszuführende Funktion durch eine zugeordnete, hierarchisch strukturierte Benennung definiert ist, die in einer Zuordnungsliste od. dgl. abgespeichert ist. Diese Hierarchie kann bei fensterorientierten Programmen mit in verschiedenen Fenstern zusammengefasst dargestellten Funktionen dadurch realisiert werden, dass jedem von einer hauptmenüartigen Bedienoberfläche aus zu öffnenden Fenster eine fortlaufende Nummer zugeordnet wird, und die in dem betreffenden Fenster aufgelisteten Funktionen werden sodann ebenfalls durchnumeriert, wobei all diesen Funktionsnummern die durch einen Punkt abgesetzte Nummer des betreffenden Fensters vorangestellt wird, bspw.: "2.3" bedeutet die dritte Funktion in dem zweiten Fenster, welches von dem Hauptmenü aus zu öffnen ist. Weitere Unterfunktionen einer Funktion können sodann ebenfalls durch einen Punkt abgesetzt als weitere Ziffern angehängt werden. Somit kann die hierarchische Struktur der Bedienungsoberfläche mit einfachsten Mitteln auf ein Zahlensystem abgebildet werden, so dass mit geringstem Speicherbedarf jede auch noch so komplexe Eingabe registriert werden kann.

Es hat sich bewährt, dass die Person des aktuellen Bedieners durch Abfrage des zum Anmelden eingegebenen Kürzels oder, insbesondere bei in einem Computernetzwerk laufenden Anwendungsprogrammen, anhand des zur Eingabe verwendeten Computers/Terminals ermittelt wird. Indem Eingaben von unterschiedlichen Bedienern voneinander unterschieden werden, können insbesondere in komplexen Computernetzwerken die unterschiedlichen, gleichzeitig laufenden Aktionssequenzen auseinandergehalten werden, so dass die Bedienungsprobleme bei aufeinanderfolgenden Eingaben eines Anwenders deutlich hervortreten.

Bevorzugt wird der absolute oder relative Zeitpunkt der Bedienhandlung von einem computereigenen Zeitgeber abgeleitet, entweder durch die Speicherung des absoluten Zeitwertes oder durch Bestimmung der Zeitdifferenz zu dem vorangehenden und vorübergehend gespeicherten Bedienungszeitpunkt. Der Zeitbezug einer Eingabe zu den vorangehenden Eingaben kann Rückschlüsse darüber liefern, ob ein Anwender sich möglicherweise unschlüssig war, wie er ein gegebenes Problem programmtechnisch lösen soll.

Die Erfindung bietet ferner die Möglichkeit, dass in den Protokollspeicher zu einer oder mehreren Bedienungshandlungen Kommentare in geschriebener und/oder gesprochener Form eingegeben und abgespeichert werden können, bspw. über Zweck der aktuellen Computerbenutzung, über Vor- und Nachteile der Bedienungsoberfläche, etc. Hierbei ist daran zu denken, dass bspw. ein Anwender zu Beginn einer Programmnutzung die gestellte Aufgabe kurz definiert, oder auch, dass bei ihm besonders unpraktisch erscheinenden Programmteilen kritische Anmerkungen gespeichert werden.

Mit großem Vorteil werden die protokollierten Daten statistisch ausgewertet. Das erfindungsgemäße Verfahren erlaubt die Sammlung großer Datenmengen, die sodann bei einer statistischen Auswertung gute Nährungswerte geben, so dass sehr exakte Aussagen über Vor- und Nachteile verschiedener Programmeigenschaften möglich sind.

Eine derartige statistische Auswertung kann von dem betreffenden Programm selbsttätig durchgeführt werden. Solchenfalls kann eventuell ein interessierter Anwender selbst Informationen über Bedienungsfehler erhalten und seine Programmiertechnik verbessern.

Eine statistische Auswertung sollte im Anschluss an eine abgeschlossene und protokollierte Aktion vorgenommen werden. Solchenfalls lässt sich nach abgeschlossener Lösung einer gestellten Aufgabe der gesamte, dabei beschrittene Lösungsbzw. Bedienungsweg überprüfen, wobei die evtl. während der Bedienung aufgetretenen Probleme aufgrund der Vielzahl von Informationen deutlich erkennbar sind.

Eine weitere Optimierung lässt sich dadurch erreichen, dass im Rahmen der statistischen Auswertung einer abgeschlossenen Aktion ein Vergleich mit früheren Aktionen durchgeführt wird, um Ähnlichkeiten festzustellen. Durch das Herausfiltern von Ähnlichkeiten bei der Durchführung verschiedener Aktionen werden einzelne, auf Ungeschicklichkeiten oder sonstige Einflussnahmen zurückzuführende Sonderfälle ausgeblendet und nur häufiger auftretende Bedienungsfehler erkannt.

Die Erfindung erfährt eine vorteilhafte Ausgestaltung dadurch, dass abgeschlossene Aktionen mit denselben Anfangsund End-Interaktionspunkten in dieselbe Klasse eingestuft und gemeinsam statistisch ausgewertet werden. Es hat sich gezeigt, dass eine Klassifizierung verschiedener Aktionen am besten anhand identischer Anfangs- und End-Interaktionspunkte möglich ist, da bei einem ähnlichen Ergebnis (End-Interaktion) auch eine ähnliche Aufgabenstellung vorausgesetzt werden kann.

Ein statistischen Auswertung kann bspw. derart erfolgen, dass hinsichtlich der Reihenfolge gemeinsame Bediensequenzen gesucht und im Hinblick auf ihre Häufigkeit bewertet werden. Solche gemeinsamen Bediensequenzen bei abgeschlossenen Aktionen derselben Klasse deuten darauf hin, dass die Anwender hierbei die vermeintlich ideale Bedienungsmöglichkeit gewählt haben. Dabei kann die zeitliche Reihenfolge derartiger Bediensequenzen schwanken, da bspw. verschiedene Formatierungsvorgänge in unterschiedlichen Reihenfolgen durchgeführt werden können, etc. Stellt sich bspw. heraus, dass eine bestimmte Eingabereihenfolge sehr häufig auftritt, so könnte daran gedacht werden, diese Eingabeschritte zu einer Überfunktion zusammenzufassen, um dadurch den Anwender von dem häufig Wiederholen immer wiederkehrender Bedienungsschritte zu entlasten.

Durch Untersuchung der Zeitintervalle zwischen je zwei Interaktionspunkten auf Extremwerte können bei besonders langen Zeitintervallen Hinweise auf Probleme bei der Auswahl der richtigen Eingabe gefunden werden, so dass an der betreffenden Stelle evtl. die Übersichtlichkeit des Programms verbessert werden muss.

Im Anschluss an eine selbsttätige Statistik-Auswertung sollten die ermittelten Statistik-Werte wie Bedienungssequenz-Häufungen, zeitliche Mittel- und/oder Extremwerte bei bestimmten Interaktionspunkten, etc. abgespeichert werden, da sie für folgende Berechnungen, insbesondere für die nächstfolgenden Statistikauswertungen als Ausgangspunkt benötigt werden.

Die Erfindung lässt sich dadurch ergänzen, dass durch aktuell gespeicherte Statistik-Werte die betreffenden, zuletzt gespeicherten Statistik-Werte derselben Aktionsklasse überschrieben werden. Da insbesondere bei Häufungswerten eine abgeschlossene Aktion durch Inkrementieren des alten Häufigkeitswertes berücksichtigt werden kann bzw. bei Extremwerten ein Vergleich mit bisher gespeichert Extremwerten anzeigt, ob der neue Wert den bisherigen überschreitet und daher festgehalten werden muss, so tritt die neue und verbesserte Information an die Stelle der bisher abgespeicherten Werte, die daraufhin überflüssig werden und gelöscht und/oder überspeichert werden können.

Statistisch ausgewertete Aktionen können gelöscht und/oder durch die protokollierten Bedienungsinformationen einer neuen Aktion überschrieben werden, um während einer länger dauernden Testphase den Speicherbedarf für den Protokollspeicher niedrig zu halten. Es kann jedoch vorgesehen sein, dass bspw. eine vorgegebene Anzahl der jüngsten Aktionen vollständig gespeichert bleibt, um Vergleiche hinsichtlich der verschiedenen Bediensequenzen zuzulassen.

Der Erfindungsgedanke erlaubt eine Weiterbildung dahingehend, dass Kommentare, Extremwerte od. dgl. in einen speziellen Speicherbereich geschrieben werden. Die Auswertung derartiger Kommentare kann nicht von dem Anwenderprogramm selbst vorgenommen werden, da dessen Intelligenz hierfür nicht ausreicht. Deswegen werden solche Informationen in einen hierfür reservierten Speicherbereich geschrieben und dort möglichst bis zu einer manuellen Auswertung aufgehoben.

Zur Perfektionierung des erfindungsgemäßen Verfahrens kann vorgesehen sein, dass nach einem definierten Ereignis, bspw. nach 200 durchgeführten Aktionen oder nach einem Zeitintervall von bspw. 1 Monat, eine Modifikation der Bedienoberfläche anhand der Statistik-Ergebnisse vorgenommen wird. Im Rahmen einer derartigen Modifikation können wie oben erläutert für besonders häufige Bediensequenzen Summenfunktionen definiert werden, welche die automatische Abarbeitung der betreffenden Eingaben beinhalten. Hierfür können an der Bedienoberfläche im Rahmen der jeweils ersten, auszuführenden Funktion Zusatz-Schaltflächen geschaffen werden, welche den Anwender von der umständlichen Eingabe immer wiederkehrender Bedienschritte entlasten. Die Schaffung derartiger Schaltflächen kann durch das erfindungsgemäße Programm automatisiert sein, so dass sich ein Programm mit einer "intelligenten" Bedienoberfläche ergibt, das sich nach jeweils kurzen Zeiträumen von bspw. einigen Wochen an besondere Erfordernisse des jeweiligen Einsatzfalles oder auch an bestimmte Bedienungsgepflogenheiten einzelner Anwender anpasst.

Schließlich entspricht es der Lehre der Erfindung, dass im Rahmen der Modifikation der Bedienoberfläche die am häufigsten benutzten Funktionen jeweils an den Anfang einer hierarchischen Stufe gesetzt werden, etc. Eine weitere Möglichkeit zur Modifikation der Bedienoberfläche liegt darin, dass die Reihenfolge der Auflistung einzelner Funktionen in den verschiedenen Fenstern der Bedienoberfläche derart geändert wird, dass die Funktionen nach ihrer Häufigkeit angeordnet werden. Dadurch kann bspw. bei einer Bedienung über ein Zeigerelement, das bspw. von einer Maus od. dgl. gesteuert wird, ein möglichst kurzer Bedienungszeitraum sichergestellt werden, da das Zeigerelement immer in dem oberen Bereich des Bildschirms verbleiben kann.

Weitere Merkmale, Einzelheiten, Vorteile und Wirkungen auf der Basis der Erfindung ergeben sich aus der nachfolgenden Beschreibung eines bevorzugten Ausführungsbeispiels der Erfindung sowie anhand der Zeichnung. Hierbei zeigt:
- Fig. 1: ein Struktogramm des erfindungsgemäßen Verfahrensablaufs;
- Fig. 2: ein Beispiel für eine Protokollierungsdatei; sowie
- Fig. 3: ein Beispiel für eine Statistikauswertung.

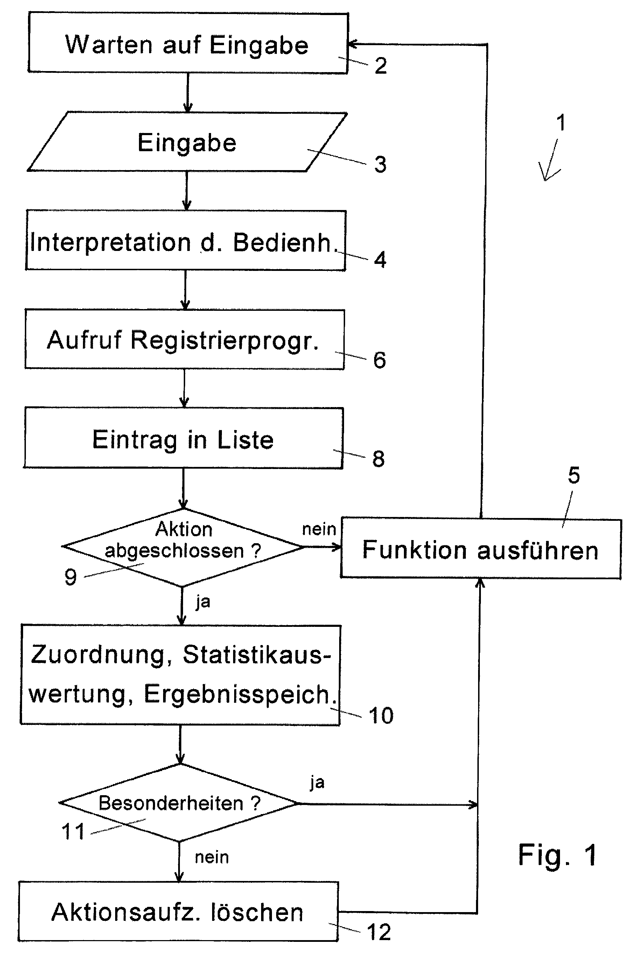

Das in Fig. 1 wiedergegebene Struktogramm 1 zeigt einen Ausschnitt aus einem Anwendungsprogramm, und zwar den Bedienungshandlungen interpretierenden Programmteil. Während der Abarbeitung eines Programms, das dazu ausgebildet ist, bei Eingabe bestimmter Anweisungen jeweils zugeordnete Funktionen auszuführen, befindet sich das System nach Abschluss der zuletzt auszuführenden Funktion in einem Warte- oder Bereitschaftszustand 2, wo die Formulierung der nächsten Anweisung über eines der angeschlossenen Eingabegeräte abgewartet wird. Sofern diese Eingabe 3, bspw. das Anwählen der einer Funktion zugeordneten Schaltfläche oder eine entsprechende, alphanumerische oder akustische Eingabe bspw. durch Drücken einer dafür vorgesehenen Eingabe-Abschlusstaste vollendet wird, so wird, wie dies im Stand der Technik bisher auch üblich ist, die eingegebene Anweisung interpretiert, d.h. einem ausführbaren Funktions-Unterprogramm od. dgl. zugeordnet 4. Bei herkömmlichen Programmen wird nach diesem Verfahrensschritt 4 die Anfangsadresse des betreffenden Unterprogramms geladen und sodann diese Funktion ausgeführt 5. Nachdem diese beendet ist, springt ein herkömmliches System wieder in den Wartezustand 2.

Diese Eingabeschleife kann zwar die Grundfunktion des Programmes sicherstellen, nach Abschluss einer Funktion sind jedoch kaum noch Informationen verfügbar, welche Aufschluss darüber zu geben vermöchten, ob die betreffende Bedienhandlung bspw. auf einem anderen Weg kürzer hätte sein können. Um typische Bedienungsweisen zu erkennen und aufgrund derartiger Erkenntnisse bspw. die Bedienungsoberfläche optimieren zu können, ist in der aus dem Stand der Technik bekannten Eingabeschleife eine Verzweigung zu einem erfindungsgemäßen Registrierungsprogramm 6 vorgesehen, und erst nach dessen Abschluss findet die Funktionsausführung 5 statt.

Das Registrierungsprogramm sammelt Informationen über die aktuelle Eingabe 3, bspw. über die hierarchische Gliederungsnummer der betreffenden Schaltfläche, die Bedienungsperson, das verwendete Eingabemedium, das Zeitintervall seit der vorangehenden Bedienung, etc., und trägt diese Informationen als weitere Zeile in einem listenförmig organisierten Protokollspeicher 7 ein 8.

In einem nächsten Schritt 9 wird abgefragt, ob durch die angewählte Funktion eine Aktion abgeschlossen wird. Hierbei können Aktionen insbesondere durch bestimmte Abschlussbefehle definiert werden, beispielsweise wird eine durch Öffnen einer Datei eingeleitete Editierungssequenz durch eine Abspeicherung der geänderten Datei abgeschlossen, so dass ein Speicherungsbefehl als Abschluss einer Aktion angesehen werden kann. Handelt es sich bei der aktuellen Eingabe 3 um keinen derartigen, eine komplexe Aktion abschließenden Befehl, so wird nach Abspeicherung der Bedienungsinformationen in die Protokollliste 8 das angewählte Funktions-Unterprogramm 5 ausgeführt, woraufhin das System wieder in den Warte- oder Bereitschaftszustand 2 zurückkehrt.

Ergibt sich bei der Abfrage 9, dass tatsächlich ein derartiger Befehl eingegeben wurde, der den Abschluss einer komplexen Aktion markiert, so werden die der soeben abzuschließenden Aktion zugeordneten Einträge in dem Protokollspeicher 7 ausgewertet 10. Hierbei kann zunächst eine Klassifizierung der abgeschlossenen Aktion erfolgen, wobei das Öffnen, Ändern und Abspeichern einer Datei bspw. als "Editierungsaktion" eingestuft werden kann, während bspw. ein Abspeichern unter einer anderen Bezeichnung als "Duplizierungsaktion" bewertet werden kann, usf. Sodann kann ein Vergleich mit zuvor abgespeicherten Eintragssequenzen desselben Sequenztyps vorgenommen werden, um bspw. gemeinsame Bedienungssequenzen herauszufiltern und deren Häufigkeit festzustellen. Ist eine entsprechende Bedienungssequenz bereits mehrmals aufgetreten, so ist bereits ein Häufigkeitswert hierfür vorhanden, und dieser kann nun inkrementiert werden. Anderenfalls wird ein neuer Häufigkeitswert angelegt. Außerdem kann für jede Schaltfläche eine mittlere Bedienungszeit errechnet werden, die bei jeder Betätigung derselben Taste oder Schaltfläche präzisiert wird. Dies ist möglich, wenn gleichzeitig mit dem alten Mittelwert auch die Häufigkeit der betreffenden Tastenbetätigung gespeichert wird, so dass der Einfluss der neuerlichen Tastenbetätigung auf den Mittelwert exakt berücksichtigt werden kann. Weitere Auswerteschritte können sich auf die Intervallzeiten zwischen den einzelnen Bedienungsschritten beziehen, um hier besonders lange Wartezeiten zu erkennen und entsprechende Extremwerte zu notieren. Solche Extremwerte können dazu dienen, um gravierende Probleme eines Anwenders bei Anwahl einer Funktion zu erkennen, etc. Schließlich werden die aktualisierten Auswertungsergebnisse abgespeichert.

Nach Abschluss dieser Auswertungssequenz 10 kann festgestellt werden 11, ob bei der jüngsten, abgeschlossenen Aktion Besonderheiten aufgetreten sind, bspw. die Inanspruchnahme einer Hilfefunktion oder das Einsprechen oder sonstige Eingeben eines Kommentars, das Beenden einer Aktion mittels Abbruch oder außergewöhnlich lange Pausen, etc. und sofern derartige Besonderheiten aufgetreten sind, bleibt die betreffende Eintragssequenz in der Protokollliste 8 weiterhin für eine manuelle Auswertung gespeichert, und anschließend wird die angewählte Funktion ausgeführt 5.

Wurden dagegen bei der Abfrage 11 keine Besonderheiten der jüngsten Bedienungssequenz entdeckt, so sind von einer weiteren Speicherung von derselben keine zusätzlichen Informationen zu erwarten, und diese kann in einem folgenden Schritt 12 gelöscht werden, oder zumindest kann sodann die älteste, gespeicherte Aufzeichnung gelöscht werden, während bspw. die jüngsten 50 Aufzeichnungen als Referenz für den Vergleich mit späteren Bedienungssequenzen vorübergehend erhalten bleiben. Auch in diesem Fall wird anschließend die Funktion 5 ausgeführt, und das Programm kehrt in den Wartezustand 2 zurück.

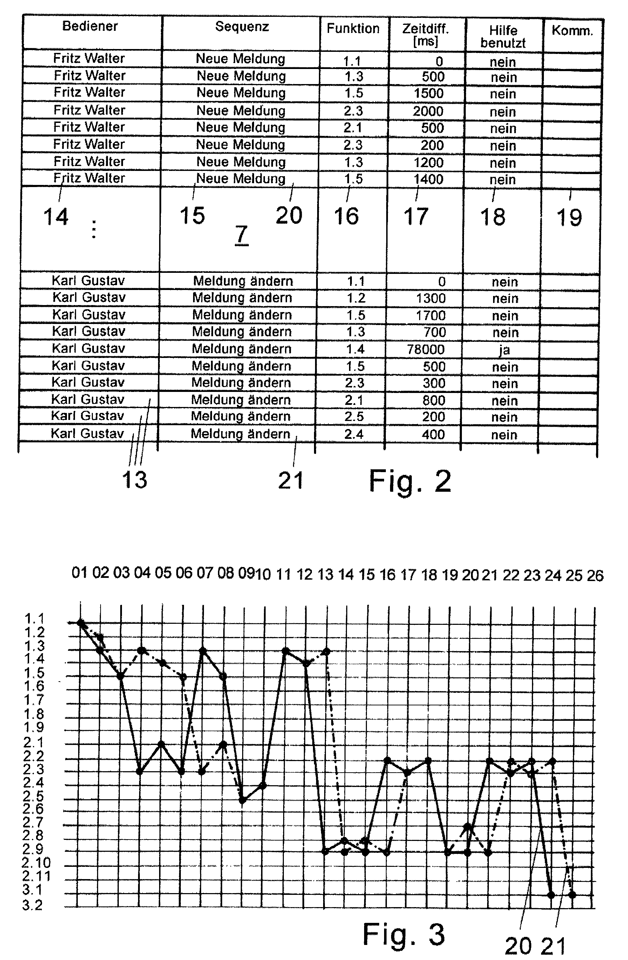

In Fig. 2 ist ein beispielhafter Auszug aus dem Protokollspeicher 7 wiedergegeben. Man erkennt die zeilenorientierte Abspeicherung der verschiedenen Datensätze 13, wobei jede Zeile dieselbe Struktur aufweist: Zunächst werden Bedienungshandlungen einzelnen Aktionen zugeordnet, die durch eine Bedienerspalte 14 von Aktionen anderer Bediener unterschieden werden. Von anderen Aktionen desselben Anwenders 14 wird die aktuelle Aktion durch einen individuellen Sequenznamen 15 unterschieden. Dieser Name kann dem Anwender überlassen werden, sofern dieser zur Eingabe zusätzlicher Informationen bereit ist. Ist dies nicht der Fall, kann der Sequenzname 15 bspw. einer automatisch generierten, fortlaufenden Nummer entsprechen.

Im Rahmen einer solchenfalls durch identischen Bediener und identischen Sequenznamen charakterisierten Aktion werden sodann die einzelnen Bedienungsschritte 16 in je einer Datenzeile abgespeichert, und als Zusatzinformation wird die von dem erfindungsgemäßen Registrierungsprogramm berechnete Intervallzeit seit der letzten Eingabe im Rahmen der aktuellen Aktion abgespeichert 17. Dies kann bspw. dadurch erfolgen, dass sich das Registrierungsprogramm den absoluten Zeitpunkt einer Eingabe 3 anhand des computereigenen Zeitgebers merkt und sodann die Zeitdifferenz gegenüber diesem Wert aus dem aktuellen Stand des computerinternen Zeitgebers berechnet. Weiterhin kann das Registrierungsprogramm anhand solchenfalls gesetzter Merkerbits erkennen, ob eine Hilfefunktion des Programmes benutzt wurde, und die Information dieses Merkerbits wird in die Spalte 18 eingetragen, und ggf. zwischenzeitlich erfolgte, als Kommentar gekennzeichnete Eingaben werden in einer Spalte 19 notiert.

Dabei muss ein Programm, das in einem Netzwerk mit mehreren Bedienern 14 gleichzeitig kommuniziert, bei der Protokollierung für die Aktionen verschiedener Bediener 14 auch verschiedene Speicherbereiche reservieren, so dass die zur selben Aktion desselben Anwenders zu zählenden Bedienungshandlungen in fortlaufenden Datenzeilen 13 eingetragen werden.

Für eine statistische Auswertung 10 sind sodann zunächst die jeweils ersten und letzten Bedienschritte 16 interessant, da diese eine Zuordnung zu bestimmten Klassen erlauben. Bei der Auszugsweisen Darstellung nach Fig. 2 wurden solche Aktionen ausgewählt, die derselben Klasse angehören, da sie beide mit der Funktion 1.1 beginnen und (in Fig. 2 nicht dargestellt) jeweils mit der Funktion 3.1 enden. Die vollständigen Aufzeichnungen dieser beiden Aktionen sind in Fig. 3 wiedergegeben. Es handelt sich hierbei um eine rasterartige Darstellung, wobei die Abszisse der mit eins beginnend gezählten Ordnungszahl des betreffenden Bedienungsschrittes innerhalb der jeweiligen Aktion entspricht, während als Ordinate alle vorhandenen Schaltflächen bzw. Funktionen in hierarchisch gegliederter Form aufgetragen sind, d. h. die Zeile 1.1 entspricht der ersten Funktion des ersten, vom Hauptmenü aus zu öffnenden Fensters, während die Zeile 1.2 der zweiten Funktion desselben Fensters zugeordnet ist, etc.

Man erkennt aus dieser Gegenüberstellung der beiden Aktionen 20, 21, dass in beiden Fällen bestimmte Bediensequenzen identisch sind, bspw. die 9. bis 12. Bedienungshandlung, außerdem entspricht die 12. bis 16. Bedienungshandlung bei der Aktion 20 der 13. bis 17. Bedienungshandlung bei der Aktion 21, und in ähnlicher Form sind die Bedienungshandlungen 20 bis 24 der Aktion 20 identisch mit den Bedienungshandlungen 21 bis 25 der Aktion 21. Sofern diese Eingabesequenzen auch bei weiteren, aufgezeichneten Aktionen vorhanden sind, so könnte die Bedienungsoberfläche bspw. dadurch optimiert werden, dass einem Aufeinanderfolgen der verschiedenen Bedienungshandlungen einer solchen Sequenz eine gemeinsame Funktion mit einer eigenen Schaltfläche zugeordnet wird, die u.U. sogar in das Hauptmenü aufgenommen werden könnte, so dass jeweils mit nur einer einzigen Eingabe ein ganzer Satz von Programmschritten abgearbeitet werden kann.

Andererseits zeigen die aufgezeichneten Informationen (Fig. 2) im Rahmen der Aktion 21, dass vor Eingabe der Funktion 1.4 ein außergewöhnlich langer Zeitraum verstrichen ist und darüber hinaus sogar eine Hilfefunktion in Anspruch genommen wurde, und diese Extremwerte können abgespeichert werden, um bei einer Häufung derartiger Extremwerte die betreffende Funktion für den Anwender transparenter zu machen, indem diese bspw. in mehrere Schritte aufgeteilt wird, auf Wunsch des Anwenders umbenannt wird oder sonst wie modifiziert wird.

All diese Modifikationen können nach Durchlauf einer genügenden Anzahl von Aufzeichnungen und somit bei ausreichender Sicherheit der Statistikdaten von dem erfindungsgemäßen Programmteil ggf. selbständig ausgeführt oder ausgelöst werden oder auf Anfrage des Anwenders vorgeschlagen werden.

## Patentansprüche

1. Verfahren zur Gewinnung von Daten für die Optimierung der Struktur eines von einem Computer abgearbeiteten Programms, insbesondere Anwendungsprogramms, das auf vordefinierte Eingaben an einem mit dem Computer gekoppelten Bedienungsgerät jeweils zugeordnete Funktionen ausführt, **dadurch gekennzeichnet, dass** bei einer, vorzugsweise jeder Eingabe (3), insbesondere vor dem Aufruf einer auszuführenden Funktion (5) von dem durch das zu optimierende Programm gesteuerten Computer selbsttätig Informationen zu der jüngsten Bedienungshandlung listenförmig in einen Protokollspeicher (7) eingetragen (8) werden.

2. Verfahren nach Anspruch 1, **dadurch gekennzeichnet, dass** in dem betreffenden Programm oder einem unterlagerten Programmteil eine Programmsequenz (6) zum Sammeln, Aufbereiten und Eintragen (8) von Informationen in einen Protokollspeicher (7) vorgesehen ist.

3. Verfahren nach Anspruch 2, **dadurch gekennzeichnet, dass** die Protokollierungs-Programmsequenz (6) im Rahmen des Bedienungshandlungen interpretierenden Programmteils (4) abgearbeitet wird.

4. Verfahren nach Anspruch 3, **dadurch gekennzeichnet, dass** die Protokollierungs-Programmsequenz (6) die Struktur eines Unterprogramms hat, das von dem Bedienungshandlungen interpretierenden Programmteil (4) aufgerufen wird.

5. Verfahren nach einem der Ansprüche 2 - 4, **dadurch gekennzeichnet, dass** der Durchlauf, insbesondere Aufruf der Protokollierungs-Programmsequenz (6) von einer Bedingung abhängig ist, die durch eine Eingabe ein- und/oder ausgeschalten werden kann.

6. Verfahren nach einem der vorhergehenden Ansprüche, **dadurch gekennzeichnet, dass** der Protokollspeicher (7) einen Teil eines computereigenen Speichers darstellt, der durch Definition einer oder mehrerer Protokolldateien für entsprechende Einträge (13) reserviert ist.

7. Verfahren nach einem der vorhergehenden Ansprüche, **dadurch gekennzeichnet, dass** die in den Protokollspeicher (7) einzutragenden (8) Bedienungsinformationen (13) Informationen über die auszuführende Funktion (16), ggf. über die Person des aktuellen Bedieners (14), das verwendete Eingabemedium, Zeitpunkt (17), Zweck (15), ggf. eingegebene Parameter oder sonstige Umstände wie Benutzung von Hilfestellungsfunktionen (18) od. dgl. umfassen.

8. Verfahren nach Anspruch 7, **dadurch gekennzeichnet, dass** die auszuführende Funktion (5) durch eine zugeordnete, hierarchisch strukturierte Benennung (16) definiert ist, die in einer Zuordnungsliste od. dgl. abgespeichert ist.

9. Verfahren nach einem der Ansprüche 7 oder 8, **dadurch gekennzeichnet, dass** die Person des aktuellen Bedieners (14) durch Abfrage des zum Anmelden eingegebenen Kürzels oder, insbesondere bei in einem Computernetzwerk laufenden Anwendungsprogrammen, anhand des zur Eingabe (3) verwendeten Computers/Terminals ermittelt wird.

10. Verfahren nach einem der Ansprüche 7 bis 9, **dadurch gekennzeichnet, dass** der absolute oder relative Zeitpunkt (17) der Bedienhandlung (3) von einem computereigenen Zeitgeber abgeleitet wird, entweder durch die Speicherung des absoluten Zeitwertes oder durch Bestimmung der Zeitdifferenz zu dem vorangehenden und vorübergehend gespeicherten Bedienungszeitpunkt.

11. Verfahren nach einem der vorhergehenden Ansprüche, **dadurch gekennzeichnet, dass** in den Protokollspeicher (7) zu einer oder mehreren Bedienungshandlungen (3) Kommentare (19) in geschriebener und/oder gesprochener Form eingegeben und abgespeichert werden können, bspw. über Zweck der aktuellen Computerbenutzung, über Vor- und Nachteile der Bedienungsoberfläche, etc.

12. Verfahren nach einem der vorhergehenden Ansprüche, **dadurch gekennzeichnet, dass** die protokollierten Daten (7, 13) statistisch ausgewertet werden (10).

13. Verfahren nach Anspruch 12, **dadurch gekennzeichnet, dass** eine statistische Auswertung (10) von dem betreffenden Programm selbst durchgeführt wird.

14. Verfahren nach Anspruch 12 oder 13, **dadurch gekennzeichnet, dass** eine statistische Auswertung (10) im Anschluss an eine abgeschlossene und protokollierte Aktion (20, 21) vorgenommen wird.

15. Verfahren nach einem der Ansprüche 12 bis 14, **dadurch gekennzeichnet, dass** im Rahmen der statistischen Auswertung (10) einer abgeschlossenen Aktion (20, 21) ein Vergleich mit früheren Aktionen durchgeführt wird, um Ähnlichkeiten festzustellen.

16. Verfahren nach einem der Ansprüche 12 bis 15, **dadurch gekennzeichnet, dass** abgeschlossene Aktionen (20, 21) mit denselben Anfangs- und End-Interaktionspunkten (16) in dieselbe Klasse eingestuft und gemeinsam statistisch ausgewertet werden (10).

17. Verfahren nach einem der Ansprüche 12 bis 16, **dadurch gekennzeichnet, dass** bei der statistischen Auswertung (10) hinsichtlich der Bedienreihenfolge gemeinsame Bediensequenzen gesucht und hinsichtlich ihrer Häufigkeit bewertet werden.

18. Verfahren nach einem der Ansprüche 12 bis 17, **dadurch gekennzeichnet, dass** die Zeitintervalle (17) zwischen je zwei aufeinanderfolgenden Interaktionspunkten (3, 16) auf Extremwerte untersucht werden.

19. Verfahren nach einem der Ansprüche 12 bis 18, **dadurch gekennzeichnet, dass** im Anschluss an eine selbsttätige Statistik-Auswertung (10) die ermittelten Statistik-Werte wie Bedienungssequenz-Häufungen, zeitliche Mittel- und/oder Extremwerte bei bestimmten Interaktionspunkten (16), etc. abgespeichert werden.

20. Verfahren nach einem der Ansprüche 12 bis 19, **dadurch gekennzeichnet, dass** durch aktuell gespeicherte Statistik-Werte die entsprechenden, zuletzt gespeicherten Statistik-Werte derselben Aktionsklasse überschrieben werden.

21. Verfahren nach einem der Ansprüche 12 bis 20, **dadurch gekennzeichnet, dass** statistisch ausgewertete Aktionen (20, 21) gelöscht und/oder durch die protokollierten Bedienungsinformationen (13 - 19) einer neuen Aktion (20, 21) überschrieben werden.

22. Verfahren nach einem der vorhergehenden Ansprüche, **da durch gekennzeichnet, dass** Kommentare (19), Extremwerte od. dgl. in einen speziellen Speicherbereich geschrieben werden.

23. Verfahren nach einem der Ansprüche 12 bis 22, **dadurch gekennzeichnet, dass** nach einem vordefinierten Ereignis, bspw. nach 200 durchgeführten Aktionen (20, 21) oder einem Zeitintervall von bspw. 1 Monat, eine Modifikation der Bedienoberfläche anhand der Statistik-Ergebnisse vorgenommen wird.

24. Verfahren nach Anspruch 23, **dadurch gekennzeichnet, dass** im Rahmen der Modifikation der Bedienoberfläche die am häufigsten benutzten Funktionen (16) jeweils an den Anfang einer hierarchischen Stufe gesetzt werden, etc.
